# EUROPEAN PATENT APPLICATION

(11) **EP 3 401 361 A1**
(43) Date of publication of application: **14.11.2018**
(21) Application number: 17735961.9
(22) Date of filing: 05.01.2017
(51) Int. Cl.: C08L 13/00, C08K 5/13, C08K 5/17

(54) **NITRILE RUBBER COMPOSITION, CROSSLINKABLE NITRILE RUBBER COMPOSITION AND CROSSLINKED RUBBER ARTICLE**

(30) Priority: 08.01.2016 JP 2016002679
(71) Applicant: Zeon Corporation, Tokyo 100-8246 (JP)
(72) Inventor: FUKUMINE, Yoshio, Tokyo 100-8246 (JP)
(74) Representative: Maiwald Patent- und Rechtsanwaltsgesellschaft mbH
(86) International application number: PCT/JP2017/000079
(87) International publication number: WO 2017/119424

(57) **Abstract**

The present invention provides a nitrile rubber composition comprising a carboxyl group-containing highly saturated nitrile rubber (A) containing an α,β-ethylenically unsaturated nitrile monomer unit in a content of 5 to 60 wt% and an α,β-ethylenically unsaturated dicarboxylic acid monoester monomer unit in a content of 1 to 30 wt%, and having an iodine value of 120 or less, and a phenol compound (B) represented by the following general formula (1): 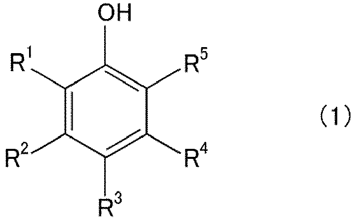 (In the general formula (1), R¹ to R⁵ are each independently a hydrogen atom, a heteroatom-free alkyl group having 1 to 8 carbon atoms, or a heteroatom-containing alkyl group having 1 to 15 carbon atoms, and at least one of R¹ to R⁵ is a heteroatom-containing alkyl group having 1 to 15 carbon atoms.)

## Description

### TECHNICAL FIELD

The present invention relates to a nitrile rubber composition capable of giving a cross-linked rubber excellent in the original state physical properties, compression set resistance and heat resistance, and a cross-linkable nitrile rubber composition and a cross-linked rubber obtained by using such a nitrile rubber composition.

### BACKGROUND ART

Nitrile rubbers (acrylonitrile-butadiene copolymer rubbers) have hitherto been used, by taking advantage of the oil resistance, mechanical properties, chemical resistance and the like thereof, as the materials for vehicle rubber components such as hoses and tubes; hydrogenated nitrile rubbers (hydrogenated acrylonitrile-butadiene copolymer rubbers) obtained by hydrogenating the carbon-carbon double bonds in the polymer main chains of nitrile rubbers are more excellent in heat resistance, and accordingly are used as rubber components such as belts, hoses and diaphragms.

As such a nitrile rubber composition, for example, Patent Document 1 has proposed a hydrogenated nitrile rubber having an α,β-ethylenically unsaturated dicarboxylic acid monoester monomer unit, and a nitrile rubber composition containing a polyamine-based cross-linking agent and a basic cross-linking accelerator. According to the nitrile rubber composition described in Patent Document 1, there is obtained a cross-linked rubber improved in heat resistance and compression set resistance to some extent; however, the cross-linked rubber is not necessarily sufficient in heat resistance depending on the intended use, and accordingly the further improvement of the heat resistance has been demanded.

### RELATED ART DOCUMENTS

### PATENT DOCUMENTS

Patent Document 1: Japanese Patent Laid-Open No. 2001-55471

### SUMMARY OF THE INVENTION

### PROBLEM TO BE SOLVED BY THE INVENTION

The present invention was made in view of such a circumstance, and an object of the present invention is to provide a nitrile rubber composition capable of giving a giving a cross-linked rubber excellent in the original state physical properties, compression set resistance and heat resistance, and a cross-linked rubber obtained by using such a nitrile rubber composition.

### MEANS FOR SOLVING THE PROBLEM

The present inventors engaged in a diligent study to achieve the above object, and consequently have perfected the present invention by discovering that the above object can be achieved on the basis of a nitrile rubber composition obtained by including a phenol compound having a phenolic hydroxyl group and a heteroatom-containing alkyl group having 1 to 15 carbon atoms in a carboxyl group-containing highly saturated nitrile rubber containing an α,β-ethylenically unsaturated nitrile monomer unit in a content of 5 to 60 wt% and an α,β-ethylenically unsaturated dicarboxylic acid monoester monomer unit in a content of 1 to 30 wt%, and having an iodine value of 120 or less.

Specifically, the present invention provides a nitrile rubber composition comprising a carboxyl group-containing highly saturated nitrile rubber (A) containing an α,β-ethylenically unsaturated nitrile monomer unit in a content of 5 to 60 wt% and an α,β-ethylenically unsaturated dicarboxylic acid monoester monomer unit in a content of 1 to 30 wt%, and having an iodine value of 120 or less, and a phenol compound (B) represented by the following general formula (1): 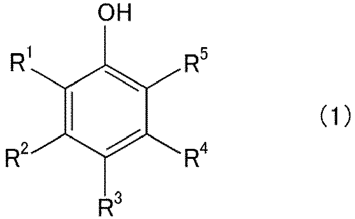 (In the general formula (1), R¹ to R⁵ are each independently a hydrogen atom, a heteroatom-free alkyl group having 1 to 8 carbon atoms, or a heteroatom-containing alkyl group having 1 to 15 carbon atoms, and at least one of R¹ to R⁵ is a heteroatom-containing alkyl group having 1 to 15 carbon atoms.)

In the nitrile rubber composition of the present invention, the heteroatom-containing alkyl group having 1 to 15 carbon atoms is preferably a group represented by the following general formula (2):

-A¹-R⁶ (2)

(In the general formula (2), A¹ is at least one heteroatom selected from O, S, P, N, F, Cl, and Br, and R⁶ is an alkyl group having 1 to 15 carbon atoms.)

In the nitrile rubber composition of the present invention, the phenol compound (B) is preferably a compound represented by the following general formula (3): 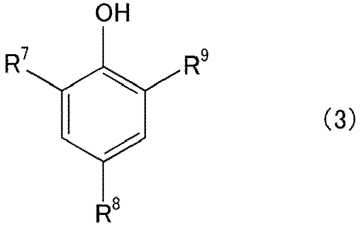 (In the general formula (3), R⁷ to R⁹ are each independently a heteroatom-free alkyl group having 1 to 8 carbon atoms or a heteroatom-containing alkyl group having 1 to 15 carbon atoms; one of R⁷ to R⁹ is a heteroatom-free alkyl group having 1 to 8 carbon atoms; and two of R⁷ to R⁹ are each a heteroatom-containing alkyl group having 1 to 15 carbon atoms.)

The present invention also provides a cross-linkable nitrile rubber composition obtained by mixing a cross-linking agent in the nitrile rubber composition.

In the cross-linkable nitrile rubber composition of the present invention, the cross-linking agent is preferably a polyamine-based cross-linking agent.

Moreover, the present invention provides a cross-linked rubber obtained by cross-linking the cross-linkable nitrile rubber composition.

### EFFECTS OF INVENTION

The present invention can provide a nitrile rubber composition capable of giving a cross-linked rubber excellent in the original state physical properties, compression set resistance and heat resistance, and a cross-linked rubber obtained by using such a nitrile rubber composition and excellent in the original state physical properties, compression set resistance and heat resistance.

### DESCRIPTION OF EMBODIMENTS

A nitrile rubber composition of the present invention comprises a carboxyl group-containing highly saturated nitrile rubber (A) containing an α,β-ethylenically unsaturated nitrile monomer unit in a content of 5 to 60 wt% and an α,β-ethylenically unsaturated dicarboxylic acid monoester monomer unit in a content of 1 to 30 wt%, and having an iodine value of 120 or less, and a phenol compound (B) represented by the general formula (1) described below.

### Carboxyl Group-Containing Highly Saturated Nitrile Rubber (A)

The carboxyl group-containing highly saturated nitrile rubber (A) containing an α,β-ethylenically unsaturated nitrile monomer unit in a content of 5 to 60 wt% and an α,β-ethylenically unsaturated dicarboxylic acid monoester monomer unit in a content of 1 to 30 wt%, and having an iodine value of 120 or less which is used in the present invention (below, sometimes simply referred to as the "carboxyl group-containing highly saturated nitrile rubber (A)") is a rubber which is obtained by copolymerizing an α,β-ethylenically unsaturated nitrile monomer, an α,β-ethylenically unsaturated dicarboxylic acid monoester monomer, and a copolymerizable other monomer added according to need, and which has an iodine value of 120 or less.

The α,β-ethylenically unsaturated nitrile monomer is not particularly limited so long as the α,β-ethylenically unsaturated nitrile monomer is an α,β-ethylenically unsaturated compound having a nitrile group. For example, acrylonitrile; α-halogenoacrylonitriles such as α-chloroacrylonitrile and α-bromoacrylonitrile; α-alkylacrylonitriles such as methacrylonitrile and ethacrylonitrile, etc. may be mentioned. Among these, acrylonitrile and methacrylonitrile are preferable, and acrylonitrile is particularly preferable. The α,β-ethylenically unsaturated nitrile monomers may be used as single types alone or as a plurality of types combined.

The content of the α,β-ethylenically unsaturated nitrile monomer unit is 5 to 60 wt%, preferably 10 to 50 wt%, more preferably 15 to 50 wt%, in all the monomer units. When the content of the α,β-ethylenically unsaturated nitrile monomer unit is too small, the oil resistance of the obtained cross-linked rubber is liable to decrease. Conversely, when the content of the α,β-ethylenically unsaturated nitrile monomer unit is too large, there is a possibility that the cold resistance of the obtained cross-linked rubber decreases.

The α,β-ethylenically unsaturated dicarboxylic acid monoester monomer is not particularly limited so long as the monomer concerned is an α,β-ethylenically unsaturated dicarboxylic acid monoester monomer having one unsubstituted (free) carboxyl group which is not esterified. The unsubstituted carboxyl group is used mainly for cross-linking.

As such the α,β-ethylenically unsaturated dicarboxylic acid monoester monomer, maleic acid monoalkyl ester such as monomethyl maleate, monoethyl maleate, monopropyl maleate, and mono-n-butyl maleate; maleic acid monocycloalkyl esters such as monocyclopentyl maleate, monocyclohexyl maleate, and monocycloheptyl maleate; maleic acid monoalkyl cycloalkyl esters such as monomethyl cyclopentyl maleate and monoethyl cyclohexyl maleate; fumaric acid monoalkyl esters such as monomethyl fumarate, monoethyl fumarate, monopropyl fumarate, and mono-n-butyl fumarate; fumaric acid monocycloalkyl esters such as monocyclopentyl fumarate, monocyclohexyl fumarate, and monocycloheptyl fumarate; fumaric acid monoalkyl cycloalkyl esters such as monomethyl cyclopentyl fumarate and monoethyl cyclohexyl fumarate; citraconic acid monoalkyl esters such as monomethyl citraconate, monoethyl citraconate, monopropyl citraconate, and mono-n-butyl citraconate; citraconic acid monocycloalkyl esters such as monocyclopentyl citraconate, monocyclohexyl citraconate, and monocycloheptyl citraconate; citraconic acid monoalkyl cycloalkyl esters such as monomethyl cyclopentyl citraconate and monoethyl cyclohexyl citraconate; itaconic acid monoalkyl esters such as monomethyl itaconate, monoethyl itaconate, monopropyl itaconate, and mono-n-butyl itaconate; itaconic acid monocycloalkyl esters such as monocyclopentyl itaconate, monocyclohexyl itaconate, and monocycloheptyl itaconate; itaconic acid monoalkyl cycloalkyl esters such as monomethyl cyclopentyl itaconate, and monoethyl cyclohexyl itaconate; etc. may be mentioned.

The α,β-ethylenically unsaturated dicarboxylic acid monoester monomers may be used as single types alone or as a plurality of types combined. Among the carboxyl group-containing monomers, the α,β-ethylenically unsaturated dicarboxylic acid monoalkyl ester monomer is more preferable, the maleic acid monoalkyl ester is further preferable, and mono-n-butyl maleate is particularly preferable. Note that the number of carbon atoms of the alkyl group of the alkyl ester is preferably 2 to 8.

The content of the α,β-ethylenically unsaturated dicarboxylic acid monoester monomer unit is preferably 1 to 30 wt%, more preferably 2 to 25 wt%, still more preferably 2 to 20 wt%, in all the monomer units. By setting the content of the α,β-ethylenically unsaturated dicarboxylic acid monoester monomer unit within the above-mentioned range, it is possible to make the obtained cross-linked rubber good in mechanical properties and compression set resistance.

In addition, the carboxyl group-containing highly saturated nitrile rubber (A) used in the present invention preferably contains a conjugated diene monomer unit so that the obtained cross-linked product has rubber elasticity.

As the conjugated diene monomer forming the conjugated diene monomer unit, conjugated diene monomer having 4 to 6 carbon atoms such as 1,3-butadiene, isoprene, 2,3-dimethyl-1,3-butadiene, 1,3-pentadiene, and chloroprene is preferable, 1,3-butadiene and isoprene are more preferable, and 1,3-butadiene is particularly preferable. The conjugated diene monomers may be used as single types alone or as a plurality of types combined.

The content of the conjugated diene monomer unit (including hydrogenated parts) is preferably 20 to 89.9 wt%, more preferably 35 to 89.8 wt%, still more preferably 40 to 84.5 wt%, in all the monomer units. By setting the content of the conjugated diene monomer unit within the above-mentioned range, it is possible to make the obtained cross-linked rubber excellent in the rubber elasticity while maintaining a good heat resistance and chemical stability.

The carboxyl group-containing highly saturated nitrile rubber (A) used in the present invention may also include, in addition to the α,β-ethylenically unsaturated nitrile monomer unit, the α,β-ethylenically unsaturated dicarboxylic acid monoester monomer unit, and the conjugated diene monomer unit, other monomer units copolymerizable with the monomers forming these. As such other monomers, an α,β-ethylenically unsaturated monocarboxylic acid monomer, an α,β-ethylenically unsaturated polyvalent carboxylic acid monomer (exclusive of the monomer corresponding to the α,β-ethylenically unsaturated dicarboxylic acid monoester monomer), an α,β-ethylenically unsaturated monocarboxylic acid ester monomer, ethylene, an α-olefin monomer, an aromatic vinyl monomer, a fluorine-containing vinyl monomer, a copolymerizable antiaging agent, etc. may be mentioned.

As the α,β-ethylenically unsaturated monocarboxylic acid monomer, acrylic acid, methacrylic acid, ethylacrylic acid, crotonic acid, cinnamic acid, etc. may be mentioned.

As the α,β-ethylenically unsaturated polyvalent carboxylic acid monomer, butenedioic acids such as fumaric acid and maleic acid, itaconic acid, citraconic acid, mesaconic acid, glutaconic acid, allylmalonic acid, teraconic acid, etc. may be mentioned. As the anhydride of the α,β-unsaturated polyvalent carboxylic acid, maleic anhydride, itaconic anhydride, citraconic anhydride, etc. may be mentioned.

As the α,β-ethylenically unsaturated monocarboxylic acid ester monomer, (meth)acrylic acid esters (abbreviations for "methacrylic acid esters and acrylic acid esters," and the same shall apply hereinafter) each having an alkyl group having 1 to 18 carbon atoms such as methyl acrylate, ethyl acrylate, n-butyl acrylate, isobutyl acrylate, n-dodecyl acrylate, methyl methacrylate, and ethyl methacrylate; (meth)acrylic acid esters each having an alkoxyalkyl group having 2 to 18 carbon atoms such as methoxymethyl acrylate, 2-methoxyethyl acrylate, 3-ethoxypropyl acrylate, 4-methoxybutyl acrylate, 12-ethoxydodecyl acrylate, 2-methoxyethyl methacrylate, 4-methoxybutyl methacrylate, and 5-ethoxypentyl methacrylate; (meth)acrylic acid esters each having a cyanoalkyl group having 2 to 12 carbon atoms such as α-cyanoethyl acrylate, α-cyanoethyl methacrylate, and cyanobutyl methacrylate; (meth)acrylic acid esters each having a hydroxyalkyl group having 1 to 12 carbon atoms such as 2-hydroxyethyl acrylate, 2-hydroxypropyl acrylate, and 2-hydroxyethyl methacrylate; and (meth)acrylic acid esters each having a fluoroalkyl group having 1 to 12 carbon atoms such as trifluoroethyl acrylate and tetrafluoropropyl methacrylate, etc. may be mentioned.

The α-olefin monomer preferably has 3 to 12 carbon atoms, and, for example, propylene, 1-butene, 4-methyl-1-pentene, 1-hexene, 1-octene, etc. may be mentioned.

As the aromatic vinyl monomer, styrene, α-methylstyrene, vinylpyridine, etc. may be mentioned.

As the fluorine-containing vinyl monomer, fluoroethyl vinyl ether, fluoropropyl vinyl ether, o-trifluoromethylstyrene, vinyl pentafluorobenzoate, difluoroethylene, tetrafluoroethylene, etc. may be mentioned.

As the copolymerizable antiaging agent, N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline, etc. may be mentioned.

These copolymerizable other monomers may be used as a plurality of types combined. The content of the copolymerizable other monomer unit(s) is preferably 50 wt% or less, more preferably 40 wt% or less, and still more preferably 10 wt% or less, in all the monomer units forming the carboxyl group-containing highly saturated nitrile rubber (A).

The iodine value in the carboxyl group-containing highly saturated nitrile rubber (A) is 120 or less, preferably 60 or less, more preferably 35 or less, and particularly preferably 15 or less. When the iodine value of the carboxyl group-containing highly saturated nitrile rubber (A) is too high, the heat resistance and the ozone resistance of the obtained cross-linked rubber are liable to decrease.

The polymer Mooney viscosity (ML 1+4, 100°C) of the carboxyl group-containing highly saturated nitrile rubber (A) is preferably 10 to 200, more preferably 15 to 150, still more preferably 15 to 100, and particularly preferably 30 to 70. When the polymer Mooney viscosity of the carboxyl group-containing highly saturated nitrile rubber (A) is too low, the mechanical properties of the obtained cross-linked rubber are liable to be lower. Conversely, when the polymer Mooney viscosity of the carboxyl group-containing highly saturated nitrile rubber (A) is too high, there is a possibility that the processability of the nitrile rubber composition is made low.

Further, the content of carboxyl group in the carboxyl group-containing highly saturated nitrile rubber (A), that is, the number of moles of the carboxyl group per 100 g of the carboxyl group-containing highly saturated nitrile rubber (A) is preferably 5×10⁻⁴ to 5×10⁻¹ ephr, more preferably 1×10⁻³ to 1×10⁻¹ ephr, particularly preferably 5×10⁻³ to 6×10⁻² ephr. By setting the content of carboxyl group of the carboxyl group-containing nitrile rubber (A) within the above-mentioned range, it is possible to make the obtained cross-linked rubber higher in mechanical properties and compression set resistance while making the nitrile rubber composition good in scorch stability.

The method for producing the carboxyl group-containing highly saturated nitrile rubber (A) used in the present invention is not particularly limited, but it is possible to produce it by copolymerizing the above-mentioned monomers and, if necessary, hydrogenating the carbon-carbon double bonds in the obtained copolymer. The polymerization method is not particularly limited and a known emulsion polymerization method or solution polymerization method may be used, but the emulsion polymerization method is preferable from the viewpoint of the industrial productivity. At the time of the emulsion polymerization, in addition to the emulsifier, a polymerization initiator, and a molecular weight adjuster, polymerization auxiliary materials usually used can be used.

The emulsifier is not particularly limited, but, for example, nonionic emulsifiers such as polyoxyethylene alkyl ethers, polyoxyethylene alkyl phenol ethers, polyoxyethylene alkyl esters, and polyoxyethylene sorbitan alkyl esters; anionic emulsifiers such as salts of fatty acids such as myristic acid, palmitic acid, oleic acid, and linoleic acid, alkylbenzene sulfonic acid salts such as sodium dodecylbenzene sulfonate, higher alcohol sulfuric acid ester salts, and alkyl sulfosuccinic acid salts; and copolymerizable emulsifiers such as sulfo esters of α,β-unsaturated carboxylic acids, sulfate esters of α,β-unsaturated carboxylic acids, sulfoalkylaryl ethers, etc. may be mentioned. The amount of addition of the emulsifier is preferably 0.1 to 10 parts by weight and more preferably 0.5 to 5 parts by weight with respect to 100 parts by weight of the monomer used for the polymerization.

The polymerization initiator is not particularly limited so long as the polymerization initiator is a radical initiator. For example, inorganic peroxides such as potassium persulfate, sodium persulfate, ammonium persulfate, potassium perphosphate, and hydrogen peroxide; organic peroxides such as t-butyl peroxide, cumene hydroperoxide, p-menthane hydroperoxide, di-t-butyl peroxide, t-butylcumyl peroxide, acetyl peroxide, isobutyryl peroxide, octanoyl peroxide, dibenzoyl peroxide, 3,5,5-trimethylhexanoyl peroxide, and t-butylperoxyisobutyrate; azo compounds such as azobisisobutyronitrile, azobis-2,4-dimethylvaleronitrile, azobiscyclohexanecarbonitrile, and methyl azobisisobutyrate; etc. may be mentioned. These polymerization initiators can be used alone or as two or more types combined. As the polymerization initiator, an inorganic or organic peroxide is preferable. When a peroxide is used as a polymerization initiator, the peroxide can be used in combination with a reducing agent such as sodium bisulfite or ferrous sulfate as a redox-type polymerization initiator. The amount of addition of the polymerization initiator is preferably 0.01 to 2 parts by weight, with respect to 100 parts by weight of the monomers used for the polymerization.

For the medium of emulsion polymerization, usually water is used. The amount of the water is preferably 80 to 500 parts by weight, and more preferably 80 to 300 parts by weight, with respect to 100 parts by weight of the monomers used for the polymerization.

In the emulsion polymerization, it is possible to further use, if necessary, polymerization auxiliary materials such as a stabilizer, a dispersant, a pH adjuster, a deoxidizer, and a particle size adjuster. When these are used, the types and the amounts used thereof are not particularly limited.

Further, in the present invention, for the obtained copolymer, if necessary, the copolymer may be hydrogenated (hydrogenation reaction). The hydrogenation may be performed on the basis of a known method. An oil layer hydrogenation method in which the latex of the copolymer obtained by emulsion polymerization is coagulated, and then the hydrogenation is performed in the oil layer; and an aqueous layer hydrogenation method in which the latex of the obtained copolymer is hydrogenated as it is, etc. may be mentioned.

When the hydrogenation is performed by the oil layer hydrogenation method, preferably the latex of the copolymer prepared by the emulsion polymerization is coagulated by salting out or by using an alcohol, and the coagulated product is filtered out and dried, and then, dissolved in an organic solvent. Next, a hydrogenation reaction (the oil layer hydrogenation method) is performed, the obtained hydride is poured into a large amount of water to be coagulated, the coagulated product is filtered out and dried, and thus the carboxyl group-containing nitrile rubber (A) can be obtained.

For the coagulation of the latex by salting out, a known coagulant such as sodium chloride, calcium chloride, or aluminum sulfate can be used. Further, instead of the coagulation by salting out, the coagulation may also be performed by using an alcohol such as methanol. The solvent for the oil layer hydrogenation method is not particularly limited so long as the solvent is a liquid organic compound dissolving the copolymer obtained by emulsion polymerization; however, as such a solvent, preferably used are benzene, chlorobenzene, toluene, xylene, hexane, cyclohexane, tetrahydrofuran, methyl ethyl ketone, ethyl acetate, cyclohexanone and acetone.

As the catalyst of the oil layer hydrogenation method, any known selective hydrogenation catalyst can be used without particular limitation; a palladium-based catalyst and a rhodium-based catalyst are preferable, and a palladium-based catalyst (such as palladium acetate, palladium chloride and palladium hydroxide) are more preferable. These may be used as two or more types combined; however, in such a case, it is preferable to use a palladium-based catalyst as the main active component. These catalysts are usually used as carried on carriers. As the carrier, silica, silica-alumina, alumina, diatomaceous earth, activated carbon, etc. may be mentioned. The amount of use of the catalyst is preferably 10 to 5000 ppm by weight and more preferably 100 to 3000 ppm by weight with respect to the copolymer.

Alternatively, when the hydrogenation is performed by the aqueous layer hydrogenation method, the hydrogenation reaction is performed by adding water to and diluting, if necessary, the latex of the copolymer prepared by the emulsion polymerization. The aqueous layer hydrogenation method includes an aqueous layer direct hydrogenation method in which the latex is hydrogenated by supplying hydrogen to the reaction system in the presence of a hydrogenation catalyst, and an indirect aqueous layer hydrogenation method in which the latex is hydrogenated by reducing the latex in the presence of an oxidizing agent, a reducing agent and an activating agent. Of these two methods, the aqueous layer direct hydrogenation method is preferable.

In the aqueous layer direct hydrogenation method, the concentration of the copolymer in the aqueous layer (concentration in latex state) is preferably 40 wt% or less, in order to prevent the aggregation. The hydrogenation catalyst is not particularly limited so long as the catalyst is a compound being hardly decomposed by water. As specific examples, among palladium catalysts, as palladium salts of carboxylic acids such as formic acid, propionic acid, lauric acid, succinic acid, oleic acid, and phthalic acid; palladium chlorides such as palladium chloride, dichloro(cyclooctadiene)palladium, dichloro(norbornadiene)palladium, and ammonium hexachloropalladate (IV); iodides such as palladium iodide; palladium sulfate·dihydrate, etc. may be mentioned. Among these, the palladium salts of carboxylic acids, dichloro(norbornadiene)palladium, and ammonium hexachloropalladate (IV) are particularly preferable. The amount of use of the hydrogenation catalyst may be appropriately set; however, the amount of use of the hydrogenation catalyst is preferably 5 to 6000 ppm by weight and more preferably 10 to 4000 ppm by weight with respect to the copolymer obtained by polymerization.

In the aqueous layer direct hydrogenation method, after the completion of the hydrogenation reaction, the hydrogenation catalyst in the latex is removed. As the method for removing the hydrogenation catalyst, for example, it is possible to adopt a method in which an adsorbent such as activated carbon or an ion-exchange resin is added to the latex, the hydrogenation catalyst is adsorbed to the adsorbent under stirring, and then the latex is subjected to a filtration or centrifugation. It is also possible not to remove the hydrogenation catalyst so as remain in the latex.

Further, in the aqueous layer direct hydrogenation method, the thus obtained latex after the hydrogenation reaction is salted out to be coagulated, filtered and dried, and subjected to other operations, and thus, the carboxyl group-containing nitrile rubber (A) can be obtained. In this case, the steps of filtration and drying following the step of coagulation can be performed with known methods, respectively.

### Phenol Compound (B)

The nitrile rubber composition of the present invention contains, in addition to the above-mentioned carboxyl group-containing highly saturated nitrile rubber (A), a phenol compound (B) represented by the following general formula (1):

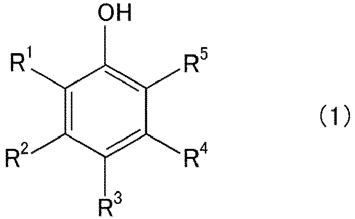

In the general formula (1), R¹ to R⁵ are each independently a hydrogen atom, a heteroatom-free alkyl group having 1 to 8 carbon atoms, or a heteroatom-containing alkyl group having 1 to 15 carbon atoms, and at least one of R¹ to R⁵ is a heteroatom-containing alkyl group having 1 to 15 carbon atoms.

According to the present invention, by adding the phenol compound (B) represented by the general formula (1) to the above-mentioned carboxyl group-containing highly saturated nitrile rubber (A), it is possible to make the obtained cross-linked rubber excellent in the original state physical properties, compression set resistance and heat resistance.

In particular, according to the findings of the present inventors, when the phenol compound having a phenolic hydroxyl group and a heteroatom-containing alkyl group(s) such as the phenol compound (B) represented by the general formula (1) is added to a nitrile rubber or a highly saturated nitrile rubber, the heteroatom-containing alkyl group(s) contained in the phenol compound acts as a radical trap, and consequently causes a failure to disturb the cross-linking reaction. Therefore, it is impossible to use a phenol compound having a phenolic hydroxyl group and a heteroatom-containing alkyl group(s) such as the phenol compound (B) represented by the general formula (1).

On the other hand, it has been found that a compound having a carboxyl group as a cross-linkable group such as the above-mentioned carboxyl group-containing highly saturated nitrile rubber (A) can be cross-linked without using a radical reaction, and accordingly does not cause the above-mentioned failure, and moreover, it is possible to increase the heat resistance of the obtained cross-linked rubber while good original state physical properties and good compression set resistance of the obtained cross-linked rubber are being maintained.

As the heteroatom-free alkyl group having 1 to 8 carbon atoms, a methyl group, an ethyl group, a n-propyl group, an isopropyl group, a n-butyl group, an isobutyl group, a sec-butyl group, a t-butyl group, a n-pentyl group, a n-hexyl group, a n-heptyl group, and a n-octyl group may be mentioned. Among these, the heteroatom-free alkyl groups having 1 to 6 carbon atoms are preferable, and a methyl group is particularly preferable.

As the heteroatom-containing alkyl group having 1 to 15 carbon atoms, the heteroatom-containing alkyl group having 1 to 15 carbon atoms, containing at least one heteroatom selected from O, S, P, N, F, Cl, and Br as a heteroatom (atoms other than carbon and hydrogen atoms) is preferable, and the heteroatom-containing alkyl group having 1 to 15 carbon atoms, containing at least one heteroatom selected from O and S is more preferable. Further, as the heteroatom-containing alkyl group having 1 to 15 carbon atoms, the group represented by the following general formula (2) is preferable:

-A¹-R⁶ (2)

In the general formula (2), A¹ is at least one heteroatom selected from O, S, P, N, F, Cl, and Br, preferably at least one heteroatom selected from O and S, and more preferably S; and R⁶ is an alkyl group having 1 to 15 carbon atoms, preferably an alkyl group having 2 to 12 carbon atoms, and more preferably an alkyl group having 4 to 12 carbon atoms.

In the present invention, from the viewpoint of the higher addition effect thereof, among the compounds represented by the general formula (1), the compound represented by the following general formula (3) is preferable:

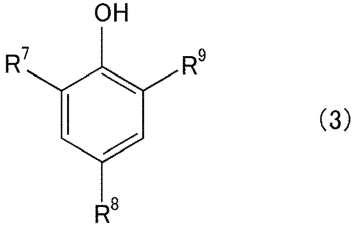

In the general formula (3), R⁷ to R⁹ are each independently a heteroatom-free alkyl group having 1 to 8 carbon atoms, or a heteroatom-containing alkyl group (preferably, a heteroatom-containing alkyl group having 1 to 12 carbon atoms, more preferably a group represented by the general formula (2)) having 1 to 15 carbon atoms, one of R⁷ to R⁹ is a heteroatom-free alkyl group having 1 to 8 carbon atoms, and two of R⁷ to R⁹ are heteroatom-containing alkyl groups each having 1 to 15 carbon atoms. Preferably, R⁷ is a heteroatom-free alkyl group having 1 to 6 carbon atoms, and R⁸ and R⁹ are each independently a heteroatom-containing alkyl group (preferably a group represented by the general formula (2)) having 1 to 12 carbon atoms.

The content of the phenol compound (B) in the nitrile rubber composition of the present invention is not particularly limited, but is preferably 0.1 to 1 part by weight, more preferably 0.2 to 1 part by weight, and still more preferably 0.2 to 0.7 part by weight, with respect to 100 parts by weight of the carboxyl group-containing highly saturated nitrile rubber (A). By setting the content of the phenol compound (B) within the above-mentioned range, it is possible to make the obtained cross-linked rubber more excellent in the original state physical properties, compression set resistance and heat resistance.

### Cross-Linkable Nitrile Rubber Composition

The cross-linkable nitrile rubber composition of the present invention is obtained by mixing a cross-linking agent in the above-mentioned nitrile rubber composition containing the carboxyl group-containing highly saturated nitrile rubber (A) and the phenol compound (B) .

The cross-linking agent is not particularly limited, but a polyamine-based cross-linking agent can be suitably used in the present invention.

The polyamine-based cross-linking agent is not particularly limited so long as the polyamine-based cross-linking agent is a compound having two or more amino groups or a compound becoming a form having two or more amino groups at the time of cross-linking, but however, the polyamine-based cross-linking agent is preferably a compound comprised of an aliphatic hydrocarbon or an aromatic hydrocarbon in which a plurality of hydrogen atoms are substituted with amino groups or hydrazide structures (structures each represented by -CONHNH₂, where CO represents a carbonyl group) and a compound becoming the form of the aforementioned compound at the time of cross-linking.

As specific examples of the polyamine-based cross-linking agent, aliphatic polyvalent amines such as hexamethylenediamine, hexamethylenediamine carbamate, N,N-dicinnamylidene-1,6-hexanediamine, tetramethylenepentamine, and hexamethylenediamine cinnamaldehyde adduct; aromatic polyvalent amines such as 4,4-methylenedianiline, m-phenylenediamine, 4,4-diaminodiphenyl ether, 3,4-diaminodiphenyl ether, 4,4-(m-phenylenediisopropylidene)dianiline, 4,4-(p-phenylenediisopropylidene)dianiline, 2,2-bis[4-(4-aminophenoxy)phenyl]propane, 4,4-diaminobenzanilide, 4,4-bis(4-aminophenoxy)biphenyl, m-xylylenediamine, p-xylylenediamine, and 1,3,5-benzenetriamine; and polyvalent hydrazides such as isophthalic acid dihydrazide, terephthalic acid dihydrazide, phthalic acid dihydrazide, 2,6-naphthalene dicarboxylic acid dihydrazide, naphthalenic acid dihydrazide, oxalic acid dihydrazide, malonic acid dihydrazide, succinic acid dihydrazide, glutamic acid dihydrazide, adipic acid dihydrazide, pimelic acid dihydrazide, suberic acid dihydrazide, azelaic acid dihydrazide, sebacic acid dihydrazide, brassylic acid dihydrazide, dodecanedioic acid dihydrazide, acetone dicarboxylic acid dihydrazide, fumaric acid dihydrazide, maleic acid dihydrazide, itaconic acid dihydrazide, trimellitic acid dihydrazide, 1,3,5-benzene tricarboxylic acid dihydrazide, aconitic acid dihydrazide, and pyromellitic acid dihydrazide; etc. may be mentioned. Among these, from the viewpoint of being capable of making the effects of the present invention more remarkable, aliphatic polyvalent amines and the aromatic polyvalent amines are preferable, hexamethylenediamine carbamate and 2,2-bis[4-(4-aminophenoxy)phenyl]propane are more preferable, and hexamethylenediamine carbamate is particularly preferable.

The content of the cross-linking agent in the cross-linkable nitrile rubber composition of the present invention is not particularly limited, but is preferably 0.1 to 20 parts by weight, more preferably 0.2 to 15 parts by weight, and still more preferably 0.5 to 10 parts by weight, with respect to 100 parts by weight of the carboxyl group-containing highly saturated nitrile rubber (A). By setting the content of the cross-linking agent within the above-mentioned range, it is possible to make the mechanical properties of the obtained cross-linked rubber better.

When a polyamine-based cross-linking agent is used as the cross-linking agent, the cross-linkable nitrile rubber composition preferably further contains a basic cross-linking accelerator, from the viewpoint of being capable of more enhancing the mechanical properties of the obtained cross-linked rubber.

As specific examples of the basic cross-linking accelerator, a compound represented by the following general formula (4), a basic cross-linking accelerator having a cyclic amidine structure, a guanidine-based basic cross-linking accelerator, an aldehyde amine-based basic cross-linking accelerator, etc. may be mentioned.

R¹⁰-NH-R¹¹ (4)

(In the general formula (4), R¹⁰ and R¹¹ are each independently a substituted or unsubstituted alkyl group having 1 to 12 carbon atoms, or a substituted or unsubstituted cycloalkyl group having 5 to 12 carbon atoms.)

R¹⁰ and R¹¹ are each a substituted or unsubstituted alkyl group having 1 to 12 carbon atoms, or a substituted or unsubstituted cycloalkyl group having 5 to 12 carbon atoms, but are each preferably a substituted or unsubstituted cycloalkyl group having 5 to 12 carbon atoms, and particularly preferably a substituted or unsubstituted cycloalkyl group having 5 to 8 carbon atoms.

Further, R¹⁰ and R¹¹ each preferably have no substituent.

Note that, as specific examples of the substituent(s) in the case where R¹⁰ and R¹¹ each have a substituent (s), a hydroxyl group, an alkoxy group, an alkoxycarbonyl group, an amino group, a halogen atom, etc. may be mentioned.

Further, among the compounds represented by the above general formula (4), from the viewpoint of being capable of more enhancing the processability and scorch stability, a compound represented by the following general formula (5) is more preferable.

R¹²-NH-R¹³ (5)

(In the general formula (5), R¹² and R¹³ are each independently a substituted or unsubstituted cycloalkyl group having 5 to 8 carbon atoms.)

R¹² and R¹³ are each a substituted or unsubstituted cycloalkyl group having 5 to 8 carbon atoms, but are each preferably a substituted or unsubstituted cycloalkyl group having 5 to 6 carbon atoms, and more preferably a substituted or unsubstituted cycloalkyl group having 6 carbon atoms.

Further, R¹² and R¹³ each preferably have no substituent.

Note that as specific examples of the substituent(s) in the case where R¹² and R¹³ each have a substituent (s), a hydroxyl group, an alkoxy group, an alkoxycarbonyl group, an amino group, a halogen atom, etc. may be mentioned.

As specific examples of the compound represented by the general formula (4), dicycloalkylamines such as dicyclopentylamine, dicyclohexylamine, and dicycloheptylamine; secondary amines each having an alkyl group and a cycloalkyl group bonded to the nitrogen atom such as N-methylcyclopentylamine, N-butylcyclopentylamine, N-heptylcyclopentylamine, N-octylcyclopentylamine, N-ethylcyclohexylamine, N-butylcyclohexylamine, N-heptylcyclohexylamine, and N-octylcyclooctylamine; secondary amines each having a hydroxyl group-containing alkyl group and a cycloalkyl group bonded to the nitrogen atom such as N-hydroxymethylcyclopentylamine and N-hydroxybutylcyclohexylamine; secondary amines each having an alkoxy group-containing alkyl group and a cycloalkyl group bonded to the nitrogen atom such as N-methoxyethylcyclopentylamine and N-ethoxybutylcyclohexylamine; secondary amines each having an alkoxycarbonyl group-containing alkyl group and a cycloalkyl group bonded to the nitrogen atom such as N-methoxycarbonylbutylcyclopentylamine and N-methoxycarbonylheptylcyclohexylamine; secondary amines each having an amino group-containing alkyl group and a cycloalkyl group bonded to the nitrogen atom such as N-aminopropylcyclopentylamine and N-aminoheptylcyclohexylamine; and secondary amines each having a halogen atom-containing cycloalkyl group bonded to the nitrogen atom such as di(2-chlorocyclopentyl)amine and di(3-chlorocyclopentyl)amine; etc. may be mentioned, but from the viewpoint of being capable of more enhancing the processability and the scorch stability, a dicycloalkylamine is preferable, dicyclopentylamine and dicyclohexylamine are more preferable, and dicyclohexylamine is particularly preferable.

As the basic cross-linking accelerator having a cyclic amidine structure, 1,8-diazabicyclo[5.4.0]undecene-7(hereinafter, sometimes abbreviated as "DBU"), 1,5-diazabicyclo[4.3.0]nonene-5 (hereinafter, sometimes abbreviated as "DBN"), 1-methylimidazole, 1-ethylimidazole, 1-phenylimidazole, 1-benzylimidazole, 1,2-dimethylimidazole, 1-ethyl-2-methylimidazole, 1-methoxyethylimidazole, 1-phenyl-2-methylimidazole, 1-benzyl-2-methylimidazole, 1-methyl-2-phenylimidazole, 1-methyl-2-benzylimidazole, 1,4-dimethylimidazole, 1,5-dimethylimidazole, 1,2,4-trimethylimidazole, 1,4-dimethyl-2-ethylimidazole, 1-methyl-2-methoxyimidazole, 1-methyl-2-ethoxyimidazole, 1-methyl-4-methoxyimidazole, 1-methyl-2-methoxyimidazole, 1-ethoxymethyl-2-methylimidazole, 1-methyl-4-nitroimidazole, 1,2-dimethyl-5-nitroimidazole, 1,2-dimethyl-5-aminoimidazole, 1-methyl-4-(2-aminoethyl)imidazole, 1-methylbenzimidazole, 1-methyl-2-benzylbenzimidazole, 1-methyl-5-nitrobenzimidazole, 1-methylimidazoline, 1,2-dimethylimidazoline, 1,2,4-trimethylimidazoline, 1,4-dimethyl-2-ethylimidazoline, 1-methyl-phenylimidazoline, 1-methyl-2-benzylimidazoline, 1-methyl-2-ethoxyimidazoline, 1-methyl-2-heptylimidazoline, 1-methyl-2-undecylimidazoline, 1-methyl-2-heptadecylimidazoline, 1-methyl-2-ethoxymethylimidazoline, 1-ethoxymethyl-2-methylimidazoline, etc. may be mentioned. Among these basic cross-linking accelerators each having a cyclic amidine structure, 1,8-diazabicyclo[5.4.0]undecene-7 and 1,5-diazabicyclo[4.3.0]nonene-5 are preferable, and 1,8-diazabicyclo[5.4.0]undecene-7 is more preferable.

As the guanidine-based basic cross-linking accelerator, tetramethylguanidine, tetraethylguanidine, diphenylguanidine, 1,3-di-o-tolylguanidine, o-tolylbiguanide, etc. may be mentioned.

As the aldehyde amine-based basic cross-linking accelerator, n-butylaldehyde aniline, acetaldehyde ammonia, etc. may be mentioned.

Among these basic cross-linking accelerators, a compound represented by the general formula (4), a guanidine-based basic cross-linking accelerator, and a basic cross-linking accelerator having a cyclic amidine structure are preferable, and a compound represented by the general formula (4) and a basic cross-linking accelerator having a cyclic amidine structure are more preferable.

Note that the compound represented by the general formula (4) may be comprised of alcohols such as an alkylene glycol and an alkyl alcohol having 5 to 20 carbon atoms mixed together, and may further contain an inorganic acid and/or an organic acid. Further, as for the compound represented by the general formula (4), the compound represented by the general formula (4) may form a salt(s) with the inorganic acid and/or the organic acid, and further may form a complex with an alkylene glycol. Further, the basic cross-linking accelerator having the above cyclic amidine structure may form a salt with a carboxylic acid or an alkyl phosphoric acid, etc.

In the case where the basic cross-linking accelerator is mixed, the amount of the basic cross-linking accelerator in the cross-linkable nitrile rubber composition of the present invention is preferably 0.1 to 20 parts by weight, more preferably 0.2 to 15 parts by weight, and still more preferably 0.5 to 10 parts by weight, with respect to 100 parts by weight of the carboxyl group-containing highly saturated nitrile rubber (A).

### Other Compounding Agents

Further, the nitrile rubber composition and the cross-linkable nitrile rubber composition of the present invention may include, in addition to the above components, compounding agents usually used in the field of rubber such as a filler, a metal oxide such as zinc oxide or magnesium oxide, an α,β-ethylenically unsaturated carboxylic acid metal salt such as zinc methacrylate or zinc acrylate, a co-cross-linking agent, a cross-linking aid, a cross-linking retarder, an antiaging agent, an antioxidant, a light stabilizer, a scorch retarder such as a primary amine, an activating agent such as diethylene glycol, a silane coupling agent, a plasticizer, a processing aid, a slip agent, an adhesive, a lubricant, a flame retardant, an antifungal agent, an acid acceptor, an antistatic agent, a pigment, and a foaming agent. The amounts of these compounding agents are not particularly limited and the compounding agents can be compounded in the amounts according to the compounding purposes so long as the compounding amounts are within ranges not impairing the object and the effects of the present invention.

The filler is not particularly limited and can be any filler so long as the filler is usually used in the field of rubber; either of an organic filler and an inorganic filler can be used, but an inorganic filler is preferable from the viewpoint of the higher compounding effect thereof.

The inorganic filler may be an inorganic filler usually used for rubber compounding; as the inorganic filler, for example, carbon black, silica, clay, alumina, aluminum hydroxide, magnesium oxide, magnesium hydroxide, calcium oxide, calcium hydroxide, magnesium aluminum oxide, titanium oxide, kaolin, pyrophyllite, bentonite, talc, attapulgite, calcium magensium silicate, aluminum silicate, magensium silicate, calcium silicate, crystalline aluminosilicate, etc. may be mentioned. Among these, carbon black, silica, and clay are preferably used. The inorganic fillers may be used as single types alone or as a plurality of types combined.

The carbon black may be a carbon black usually used for rubber compounding; as the carbon black, for example, furnace black, acetylene black, thermal black, channel black, graphite, etc. may be mentioned.

As the silica, natural silicas such as quartz powder and silica stone powder, synthetic silicas such as silicic anhydride (such as silica gel and Aerosil), and hydrous silicic acid, etc. may be mentioned; among these, the synthetic silicas are preferable.

The clay may be any natural mineral mainly composed of hydrous aluminum silicate; as such a clay, without being particularly limited to, montmorillonite, pyrophyllite, kaolinite, halloysite, sericite, etc. may be mentioned.

Note that as the inorganic filler, there may be used an inorganic filler subjected to a coupling treatment with a silane coupling agent, a titanium coupling agent or the like, or subjected to a surface modification treatment with a higher fatty acid or a metal salt thereof, a higher fatty acid derivative such as an ester or an amide, a surfactant or the like.

The silane coupling agent is not particularly limited, but as specific examples thereof, sulfur-containing silane coupling agents such as γ-mercaptopropyltrimethoxysilane, γ-mercaptomethyltrimethoxysilane, γ-mercaptomethyltriethoxysilane, γ-mercaptohexamethyldisilazane, bis(3-triethoxysilylpropyl)tetrasulfane, and bis(3-triethoxysilylpropyl)disulfane; epoxy group-containing silane coupling agents such as γ-glycidoxypropyltrimethoxy silane, γ-glycidoxypropylmethyldimethoxysilane, β-(3,4-epoxycyclohexyl)ethyltrimethoxysilane, and γ-glycidoxypropylmethyldiethoxysilane; amino group-containing silane coupling agents such as N-(β-aminoethyl)-γ-aminopropyltrimethoxysilane, γ-aminopropyltrimethoxysilane, γ-aminopropyltriethoxysilane, N-2-(aminoethyl)-3-aminopropyltrimethoxysilane, 3-triethoxysilyl-N-(1,3-dimethyl-butylidene)propylamine, and N-phenyl-3-aminopropyltrimethoxysilane; (meth)acryloxy group-containing silane coupling agents such as γ-methacryloxypropyltrimethoxysilane, γ-methacryloxypropyltris(β-methoxyethoxy)silane, γ-methacryloxypropylmethyldimethoxysilane, γ-methacryloxypropylmethyldiethoxysilane, and γ-methacryloxypropyltriethoxysilane, and γ-acryloxypropyltrimethoxysilane; vinyl group-containing silane coupling agents such as vinyltrimethoxysilane, vinyltriethoxysilane, vinyltris(β-methoxyethoxy)silane, vinyltrichlorosilane, and vinyltriaceoxysilane; chloropropyl group-containing silane coupling agents such as 3-chloropropyltrimethoxysilane; isocyanate group-containing silane coupling agents such as 3-isocyanatopropyltriethoxysilane; styryl group-containing silane coupling agents such as p-styryltrimethoxysilane; ureido group-containing silane coupling agents such as 3-ureidopropyltriethoxysilane; allyl group-containing silane coupling agents such as diallyldimethyl silane; alkoxy group-containing silane coupling agent such as tetraethoxysilane; phenyl group-containing silane coupling agents such as diphenyldimethoxysilane; fluoro group-containing silane coupling agent such as trifluoropropyltrimethoxysilane; alkyl group-containing silane coupling agents such as isobutyltrimethoxysilane and cyclohexylmethyldimethoxysilane; aluminum-based coupling agents such as acetoalkoxyaluminum diisopropylate; titanate-based coupling agents such as isopropyltriisostearoyl titanate, isopropyltris(dioctylpyrophosophate) titanate, isopropyltri(N-aminoethyl-aminoethyl) titanate, tetraoctylbis(ditridecylphosphiye) titanate, tetra(2,2-diallyloxymethyl-1-butyl)bis(ditridecylphosphite) titanate, bis(dioctylpyrophosphate)oxyacetate titanate, bis(dioctylpyrophosphate)ethylene titanate, tetraisopropylbis(dioctylphosphite) titanate, and isopropyltriisostearoyl titanate; etc. may be mentioned. These may be used as single types alone or as a plurality of types combined.

The plasticizer is not particularly limited, but possible to use a trimellitic acid-based plasticizer, a pyromellitic acid-based plasticizer, an ether ester-based plasticizer, a polyester-based plasticizer, a phthalic acid-based plasticizer, an adipic acid ester-based plasticizer, a phosphoric acid ester-based plasticizer, a sebacic acid ester-based plasticizer, an alkylsulfonic acid ester compound plasticizer, and an epoxidized vegetable oil-based plasticizer can be used. As specific examples, tri-2-ethylhexyl trimellitate, trimellitic acid isononyl ester, trimellitic acid mixed linear alkyl ester, dipentaerythritol ester, pyromellitic acid 2-ethylhexyl ester, polyether ester (molecular weight: approximately 300 to 5000), adipic acid bis[2-(2-butoxyethoxy)ethyl], dioctyl adipate, adipic acid-based polyester (molecular weight: approximately 300 to 5000), dioctyl phthalate, diisononyl phthalate, dibutyl phthalate, tricresyl phosphate, dibutyl sebacate, alkylsulfonic acid phenyl ester, epoxidized soybean oil, diheptanoate, di-2-ethyl hexanoate, didecanoate, etc. may be mentioned. These may be used as single types or a plurality of types combined.

Furthermore, the nitrile rubber composition and the cross-linkable nitrile rubber composition of the present invention may contain rubber other than the above-mentioned carboxyl group-containing highly saturated nitrile rubber (A) in a range where the effects of the present invention are not obstructed. As such rubber other than the above-mentioned carboxyl group-containing highly saturated nitrile rubber (A), acrylic rubber, ethylene-acrylic acid copolymer rubber, fluororubber, styrene-butadiene copolymer rubber, polybutadiene rubber, ethylene-propylene copolymer rubber, ethylene-propylene-diene ternary copolymer rubber, epichlorohydrin rubber, urethane rubber, chloroprene rubber, silicone rubber, fluorosilicone rubber, chlorosulfonated polyethylene rubber, natural rubber, polyisoprene rubber, etc. may be mentioned. When mixing in rubber other than the carboxyl group-containing highly saturated nitrile rubber (A), the amount is preferably 30 parts by weight or less, more preferably 20 parts by weight or less, still more preferably 10 parts by weight or less with respect to 100 parts by weight of the carboxyl group-containing highly saturated nitrile rubber (A).

The nitrile rubber composition and the cross-linkable nitrile rubber composition of the present invention are each prepared by mixing the above-mentioned ingredients preferably in a nonaqueous system. The method for preparing each of the nitrile rubber composition and the cross-linkable nitrile rubber composition of the present invention is not limited, but each of the nitrile rubber composition and the cross-linkable nitrile rubber composition of the present invention can be usually prepared as follows: the ingredients other than the cross-linking agent and the ingredients unstable against heat (such as a cross-linking aid) are subjected to a primary kneading with a mixing machine such as a Banbury mixer, an internal mixer and a kneader; then the kneaded mixture is transferred to a roll or the like, and the cross-linking agent and the ingredients unstable against heat are added to the kneaded mixture, and then the resulting mixture is subjected to a secondary kneading to prepare the nitrile rubber composition or the cross-linkable nitrile rubber composition.

### Cross-Linked Rubber

The cross-linked rubber of the present invention is obtained by cross-linking the above cross-linkable nitrile rubber composition of the present invention.

The cross-linked rubber of the present invention can be produced as follows: the cross-linkable nitrile rubber composition of the present invention is used, the composition is formed by using a forming machine corresponding to the desired shape, such as an extruder, an injection molding machine, a compressor, or a roll, the cross-linking reaction is performed by heating the formed product, and thus the shape of the formed product is fixed to produce the cross-linked rubber. In this case, the cross-linking may be performed after preliminarily performing the forming, or alternatively, the forming and the cross-linking may also be performed simultaneously. The forming temperature is usually 10 to 200°C, and preferably 25 to 120°C. The cross-linking temperature is usually 100 to 200°C and preferably 130 to 190°C, and the cross-linking time is usually 1 minute to 24 hours and preferably 2 minutes to 1 hour.

Further, depending on the shape, size, etc. of the cross-linked product, sometimes, even if the surface is cross-linked, the inside part is not sufficiently cross-linked, so it is possible to further heat the rubber for secondary cross-linking.

As the heating method, a general method which is used for cross-linking rubber such as press heating, steam heating, oven heating, and hot air heating may be suitably selected.

The thus obtained cross-linked rubber of the present invention is obtained by using the nitrile rubber composition or the cross-linkable nitrile rubber composition of the present invention, and is excellent in the original state physical properties, compression set resistance and heat resistance.

Therefore, the cross-linked rubber of the present invention, taking advantage of such a characteristic, can be used for various seal members such as O-rings, packings, diaphragms, oil seals, shaft seals, bearing seals, well head seals, shock absorber seals, air compressor seals, seals for sealing in Freon or fluorohydrocarbons or carbon dioxide which is used for compressors for cooling devices for air-conditioners or refrigerating machines of air-conditioning systems, seals for sealing in supercritical carbon dioxide or subcritical carbon dioxide which is used for the washing media in precision washing, seals for roller devices (roller bearings, automotive hub units, automotive water pumps, linear guide devices and ball screws, etc.), valves and valve seats, BOP (blow out preventer), and bladders; various types of gaskets such as intake manifold gaskets which are attached at connecting parts of intake manifolds and cylinder heads, cylinder head gaskets which are attached at connecting parts of cylinder blocks and cylinder heads, rocker cover gaskets which are attached at connecting parts of rocker covers and cylinder heads, oil pan gaskets which are attached at connecting parts of oil pans and cylinder blocks or transmission cases, fuel cell separator gaskets which are attached between pairs of housings straddling unit cells provided with positive electrodes, electrolyte plates, and negative electrodes, and top cover gaskets for hard disk drives; various types of rolls such as printing rolls, ironmaking rolls, papermaking rolls, industrial rolls, and office equipment rolls; various types of belts such as flat belts (film core flat belts, cord flat belts, laminated flat belts, single type flat belts, etc.), V-belts (wrapped V-belts, low edge V-belts, etc.), V-ribbed belts (single V-ribbed belts, double V-ribbed belts, wrapped V-ribbed belt, rubber-backed V-ribbed belts, top cog V-ribbed belts, etc.), CVT use belts, timing belts, toothed belts, and conveyor belts; various types of hoses such as fuel hoses, turbo air hoses, oil hoses, radiator hoses, heater hoses, water hoses, vacuum brake hoses, control hoses, air-conditioner hoses, brake hoses, power steering hoses, air hoses, marine hoses, risers, and flow lines; and various types of boots such as CVJ boots, propeller shaft boots, constant velocity joint boots, and rack and pinion boots; attenuating member rubber parts such as cushion materials, dynamic dampers, rubber couplings, air springs, shock absorbers, and clutch facing materials; dust covers, automotive interior members, friction materials, tires, covered cables, shoe soles, electromagnetic wave shields, binders for flexible printed circuit boards or other binders, fuel cell separators and also other broad applications in the electronics field.

### EXAMPLES

Hereinafter, the present invention will be described specifically by way of Examples and Comparative Examples. In what follows, unless otherwise specified, "parts" are based on weight. Note that the tests and the evaluations were carried out as follows.

### Content of Carboxyl Group

To 0.2 g of a 2-mm square piece of a carboxyl group-containing highly saturated nitrile rubber, 100 mL of 2-butanone was added. The mixture was stirred for 16 hours, and then 20 mL of ethanol and 10 mL of water were added to the mixture. While stirring, a titration was performed at room temperature by using a 0.02N hydrous ethanol solution of potassium hydroxide, and thymolphthalein as an indicator, and thus the content of the carboxyl group was determined as the number of moles of the carboxyl group in 100 g of rubber (units: ephr).

### Composition of Carboxyl Group-Containing Highly Saturated Nitrile Rubber

The contents of the respective monomer units constituting the carboxyl group-containing highly saturated nitrile rubber were measured by the following methods.

Specifically, the content of the mono-n-butyl maleate unit and the content of the methacrylic acid unit were calculated as follows: the number of moles of the carboxyl group of each of these unit with respect to 100 g of the carboxyl group-containing highly saturated nitrile rubber after hydrogenation was determined by the above-mentioned method for measuring "the content of the carboxyl group", and then the determined number of moles was converted into the content of the unit concerned.

The content of the 1,3-butadiene unit (including the hydrogenated fraction) was calculated by measuring the iodine value of the carboxyl group-containing highly saturated nitrile rubber before the hydrogenation reaction by the below-mentioned method.

The content of the acrylonitrile unit was calculated by measuring the nitrogen content in the carboxyl group-containing highly saturated nitrile rubber after hydrogenation by the Kjeldahl method in accordance with JIS K6384.

The content of the 2-methoxyethyl acrylate unit and the content of the butyl acrylate unit were calculated as the balances of the monomer units.

### Iodine Value

The iodine value of the carboxyl group-containing highly saturated nitrile rubber was measured in accordance with JIS K 6235.

### Mooney Viscosity

The Mooney viscosity (polymer Mooney) of the carboxyl group-containing highly saturated nitrile rubber was measured in accordance with JIS K6300 (units: [ML1+4, 100°C]).

### Original State Physical Properties (Tensile Strength,

### Elongation at Break)

The nitrile rubber composition was placed in a mold of 15 cm in length, 15 cm in width and 0.2 cm in depth, and was press-formed at 170°C for 20 minutes while being pressurized at a press pressure of 10 MPa. Thus, a sheet-shaped primary cross-linked product was obtained. Then, the obtained primary cross-linked product was transferred to a gear oven and subjected to a secondary cross-linking at 170°C for 4 hours. The obtained sheet-like cross-linked rubber was punched with a No. 3 type dumbbell to prepare a test piece. By using the obtained test piece, the tensile strength and the elongation at break of the cross-linked rubber were measured in accordance with JIS K6251.

### Compression Set (Disk Compression Set)

By using a mold, a nitrile rubber composition was pressed at a temperature of 170°C for 25 minutes, thus the nitrile rubber composition was cross-linked, and a cylindrical primary cross-linked product having a diameter of 29 mm and a height of 12.5 mm. Subsequently, the obtained primary cross-linked product was further heated under the conditions of 170°C and 4 hours in a gear oven to be subjected to a secondary cross-linking, and thus a cylindrical test piece was obtained. By using the obtained test piece, the compression set (disk compression set) was measured after the test piece was placed in an environment of 120°C for 70 hours in a state of being compressed by 25%, in accordance with JIS K6262. The smaller this value, the more excellent the compression set resistance.

### Heat Resistance

In the same manner as in the evaluation of the original state physical properties, a sheet-like cross-linked rubber was obtained, and then subjected to an air heating aging test in accordance with JIS K6257. Specifically, the sheet-like cross-linked rubber was held in a gear oven under the conditions of a temperature of 150°C and 168 hours, then a tensile test was performed in the same manner as in the case of the original state physical properties, and the elongation change before and after the air heating aging test was measured. It can be determined that the smaller the absolute value of the elongation change, the more excellent the heat resistance.

### Production Example 1: Production of Carboxyl Group-Containing Highly Saturated Nitrile Rubber (A-1)

In a metal bottle, 180 parts of ion exchanged water, 25 parts of an aqueous solution of sodium dodecylbenzenesulfonate having a concentration of 10 wt%, 37 parts of acrylonitrile, 6 parts of mono-n-butyl maleate, and 0.75 parts of t-dodecyl mercaptan (molecular weight adjuster) were placed in the mentioned order, the gas inside the metal bottle was replaced with nitrogen three times, and then 57 parts of 1,3-butadiene was placed in the metal bottle. The metal bottle was held at 5°C, 0.1 part of cumene hydroperoxide (polymerization initiator) was placed in the metal bottle, and the polymerization reaction was performed for 16 hours while the metal bottle was being rotated. Then, 0.1 part of an aqueous solution of hydroquinone (polymerization terminator) having a concentration of 10 wt% was added to terminate the polymerization reaction; successively, the residual monomers were removed by using a rotary evaporator at a water temperature of 60°C, to obtain a latex (solid content concentration: approximately 30 wt%) of an acrylonitrile-butadiene-mono-n-butyl maleate copolymer rubber.

Then, in an autoclave, the latex obtained as described above and a palladium catalyst (a solution prepared by mixing a 1 wt% palladium acetate acetone solution and an equal weight of ion exchanged water) were added in such a way that the content of palladium was 2000 ppm by weight with respect to the dry weight of the rubber contained in the latex obtained as described above; then, a hydrogenation reaction was performed at a hydrogen pressure of 3 MPa and a temperature of 50°C for 6 hours to obtain a latex of a carboxyl group-containing highly saturated nitrile rubber (A-1).

Then, to the obtained latex of the carboxyl group-containing highly saturated nitrile rubber (A-1), two times volume of methanol was added to coagulate the latex, then the resulting coagulated product was vacuum dried at 60°C for 12 hours to thereby obtain the carboxyl group-containing highly saturated nitrile rubber (A-1). The obtained carboxyl group-containing highly saturated nitrile rubber (A-1) had an iodine value of 10, a carboxyl group content of 3.2×10⁻² ephr, a polymer Mooney viscosity (ML1+4, 100°C) of 45. The obtained carboxyl group-containing highly saturated nitrile rubber (A-1) consisted of 35.6 wt% of the acrylonitrile unit, 58.8 wt% of the butadiene unit (including the hydrogenated fraction), and 5.6 wt% of the mono-n-butyl maleate unit.

### Production Example 2: Production of Carboxyl Group-Containing Highly Saturated Nitrile Rubber (A-2)

A carboxyl group-containing highly saturated nitrile rubber (A-2) was obtained in the same manner as in Production Example 1 except that the amount of acrylonitrile was altered to 45 parts, the amount of mono-n-butyl maleate was altered to 6 parts, and the amount of 1,3-butadiene was altered to 49 parts. The obtained carboxyl group-containing highly saturated nitrile rubber (A-2) had an iodine value of 9, a carboxyl group content of 3.0×10⁻² ephr, and a polymer Mooney viscosity (ML1+4, 100°C) of 40. The obtained carboxyl group-containing highly saturated nitrile rubber (A-2) consisted of 45.4 wt% of the acrylonitrile unit, 49.7 wt% of the butadiene unit (including the hydrogenated fraction), and 4.9 wt% of the mono-n-butyl maleate unit.

### Production Example 3: Production of Carboxyl Group-Containing Highly Saturated Nitrile Rubber (A-3)

A carboxyl group-containing highly saturated nitrile rubber (A-3) was obtained in the same manner as in Production Example 1 except that the amount of acrylonitrile was altered to 23 parts, the amount of mono-n-butyl maleate was altered to 6.5 parts, and the amount of 1,3-butadiene was altered to 40 parts, and further 30.5 parts of 2-methoxyethyl acrylate was added. The obtained carboxyl group-containing highly saturated nitrile rubber (A-3) had an iodine value of 10, a carboxyl group content of 3.7×10⁻² ephr, and a polymer Mooney viscosity (ML1+4, 100°C) of 48. The obtained carboxyl group-containing highly saturated nitrile rubber (A-3) consisted of 24 wt% of acrylonitrile unit, 46.6 wt% of the butadiene unit (including the hydrogenated fraction), 6.5 wt% of mono-n-butyl maleate unit, and 22.9 wt% of the 2-methoxyethyl acrylate unit.

### Production Example 4: Production of Carboxyl Group-Containing Highly Saturated Nitrile Rubber (A-4)

A carboxyl group-containing highly saturated nitrile rubber (A-4) was obtained in the same manner as in Production Example 1 except that the amount of acrylonitrile was altered to 23 parts, the amount of mono-n-butyl maleate was altered to 6.5 parts, and the amount of 1,3-butadiene was altered to 40 parts, and further 30.5 parts of butyl acrylate was added. The obtained carboxyl group-containing highly saturated nitrile rubber (A-4) had an iodine value of 10, a carboxyl group content of 2.8×10⁻² ephr, and a polymer Mooney viscosity (ML1+4, 100°C) of 48. The obtained carboxyl group-containing highly saturated nitrile rubber (A-4) consisted of 24 wt% of the acrylonitrile unit, 46.6 wt% of the butadiene unit (including the hydrogenated fraction), 6.5 wt% of mono-n-butyl maleate unit, and 22.9 wt% of the butyl acrylate unit.

### Production Example 5: Production of Carboxyl Group-Containing Highly Saturated Nitrile Rubber (A-5)

A carboxyl group-containing highly saturated nitrile rubber (A-5) was obtained in the same manner as in Production Example 1 except that the amount of acrylonitrile was altered to 15 parts, the amount of mono-n-butyl maleate was altered to 5 parts, and the amount of 1,3-butadiene was altered to 43 parts, and further 37 parts of butyl acrylate was added. The obtained carboxyl group-containing highly saturated nitrile rubber (A-5) had an iodine value of 10, a carboxyl group content of 2.9×10⁻² ephr, and a polymer Mooney viscosity (ML1+4, 100°C) of 40. The obtained carboxyl group-containing highly saturated nitrile rubber (A-5) consisted of 15.4 wt% of the acrylonitrile unit, 43.5 wt% of the butadiene unit (including the hydrogenated fraction), 5 wt% of the mono-n-butyl maleate unit, and 36.1 wt% of the butyl acrylate unit.

### Production Example 6: Production of Carboxyl Group-Containing Highly Saturated Nitrile Rubber (A'-6)

A carboxyl group-containing highly saturated nitrile rubber (A'-6) was obtained in the same manner as in Production Example 1 except that 6 parts of methacrylic acid was used in place of 6 parts of mono-n-butyl maleate. The obtained carboxyl group-containing highly saturated nitrile rubber (A'-6) had an iodine value of 10, a carboxyl group content of 3.1×10⁻² ephr, a polymer Mooney viscosity (ML1+4, 100°C) of 50. The obtained carboxyl group-containing highly saturated nitrile rubber (A'-6) consisted of 35.8 wt% of the acrylonitrile unit, 58.7 wt% of the butadiene unit (including the hydrogenated fraction), and 5.5 wt% of the methacrylic acid unit.

### Production Example 7: Production of Highly Saturated Nitrile Rubber (A'-7)

In a reactor, 200 parts of ion exchanged water, and 2.25 parts of a fatty acid potassium soap (a potassium salt of a fatty acid) were added to prepare a soap aqueous solution. Then, in the soap aqueous solution, 37 parts of acrylonitrile and 0.5 part of t-dodecyl mercaptan (molecular weight adjuster) were placed in the mentioned order, the gas inside the reactor was replaced with nitrogen three times, and then 63 parts of 1,3-butadiene was placed in the reactor. Next, the reactor was held at 5°C, 0.1 part of cumene hydroperoxide (polymerization initiator) was placed in the reactor, and the polymerization reaction was performed for 16 hours while the reaction mixture in the reactor was being stirred. Then, 0.1 part of an aqueous solution of hydroquinone (polymerization terminator) having a concentration of 10 % was added to terminate the polymerization reaction, and the residual monomers were removed by using a rotary evaporator at a water temperature of 60°C, to obtain a latex (solid content concentration: approximately 25 wt%) of a nitrile rubber.

Next, the latex obtained as described above was added to an aqueous solution of aluminum sulfate in an amount of 3 wt% with respect to the weight of the nitrile rubber contained in the latex, the resulting mixture was stirred to coagulate the latex, the coagulated latex was filtered off while being washed with water, and then the filtered coagulated latex was vacuum dried at 60°C for 12 hours, to obtain a nitrile rubber. Then, the obtained nitrile rubber was dissolved in acetone so as for the concentration to be 12 %, the resulting solution was placed in an autoclave, a palladium-silica catalyst was added to the solution in an amount of 500 ppm by weight with respect to the nitrile rubber, and the hydrogenation reaction was performed at a hydrogen pressure of 3 MPa and a temperature of 50°C. After the completion of the hydrogenation reaction, the reaction mixture was poured into a large amount of water to coagulate the reaction product, and the reaction product was filtered off and dried, to obtain a highly saturated nitrile rubber (A'-7). The obtained highly saturated nitrile rubber (A'-7) had an iodine value of 8, and a polymer Mooney viscosity [ML1+4, 100°C] of 85, and substantially did not contain any carboxyl group. The highly saturated nitrile rubber (A'-7) consisted of 36.2 wt% of the acrylonitrile unit and 63.8 wt% of the 1,3-butadiene unit (including the hydrogenated fraction).

### Example 1

By using a Banbury mixer, the following ingredients were added to and mixed with at 50°C for 5 minutes with 100 parts of the carboxyl group-containing highly saturated nitrile rubber (A-1) obtained in Production Example 1: 40 parts of an FEF carbon black (trade name "Seast SO", made by Tokai Carbon Co., Ltd.), 5 parts of tri-2-ethylhexyl trimellitate (trade name "Adekacizer C-8", made by ADEKA Corporation, plasticizer), 1.5 parts of 4,4'-di-(α,α-dimethylbenzyl)diphenylamine (trade name "Nocrac CD", made by Ouchi Shinko Chemical Industrial Co., Ltd., antiaging agent), 1 part of stearic acid, 1 part of polyoxyethylene alkyl ether phosphoric acid ester (trade name "Phosphanol RL210", made by Toho Chemical Industry Co., Ltd., processing aid), and 0.2 part of 4,6-bis(octylthiomethyl)-o-cresol (trade name "IRGANOX 1520L", made by BASF Inc., antiaging agent (B); in the general formula (1), R¹=-CH₃, R²=-H, R³=-S-C₈H₁₇, R⁴=-H, R⁵=-S-C₈H₁₇). Next, the obtained mixture was transferred to a roll at 50°C, 2.4 parts of hexamethylenediamine carbamate (trade name "Diak#1", made by Du Pont Dow Elastomer Corporation, polyamine-based cross-linking agent belonging to aliphatic polyvalent amines), and 4 parts of 1,8-diazabicyclo[5.4.0]-undecene-7 (DBU) (trade name "RHENOGRAN XLA-60 (GE2014)", made by Rhein Chemie Corporation; a product of 60% of DBU (including a fraction being zinc dialkyldiphosphate salt), a basic cross-linking accelerator) were added to the mixture, and the mixture was kneaded to obtain a nitrile rubber composition.

By using the obtained nitrile rubber composition, the measurements of the original state physical properties (tensile strength, elongation at break), the compression set (disk compression set), and the heat resistance were performed by using the above-mentioned methods. The results thus obtained are shown in Table 1.

### Example 2

A nitrile rubber composition was prepared in the same manner as in Example 1 except that the amount of 4,6-bis(octylthiomethyl)-o-cresol was altered from 0.2 part to 0.5 part, and the evaluations were performed in the same manner as in Example 1. The results thus obtained are shown in Table 1.

### Example 3

A nitrile rubber composition was prepared in the same manner as in Example 1 except that the amount of 4,6-bis(octylthiomethyl)-o-cresol was altered from 0.2 part to 1 part, and the evaluations were performed in the same manner as in Example 1. The results thus obtained are shown in Table 1.

### Example 4

A nitrile rubber composition was prepared in the same manner as in Example 2 except that 100 parts of the carboxyl group-containing highly saturated nitrile rubber (A-2) obtained in Production Example 2 was used in place of 100 parts of the carboxyl group-containing highly saturated nitrile rubber (A-1), and the amount of hexamethylenediamine carbamate was altered from 2.4 parts to 2 parts, and the evaluations were performed in the same manner as in Example 1. The results thus obtained are shown in Table 1.

### Example 5

A nitrile rubber composition was prepared in the same manner as in Example 2 except that 100 parts of the carboxyl group-containing highly saturated nitrile rubber (A-3) obtained in Production Example 3 was used in place of 100 parts of the carboxyl group-containing highly saturated nitrile rubber (A-1), the amount of the FEF carbon black was altered from 40 parts to 45 parts, and the amount of hexamethylenediamine carbamate was altered from 2.4 parts to 2.7 parts, and the evaluations were performed in the same manner as in Example 1. The results thus obtained are shown in Table 1.

### Example 6

A nitrile rubber composition was prepared in the same manner as in Example 2 except that 100 parts of the carboxyl group-containing highly saturated nitrile rubber (A-4) obtained in Production Example 4 was used in place of 100 parts of the carboxyl group-containing highly saturated nitrile rubber (A-1), the amount of the FEF carbon black was altered from 40 parts to 50 parts, and the amount of hexamethylenediamine carbamate was altered from 2.4 parts to 1.9 parts, and the evaluations were performed in the same manner as in Example 1. The results thus obtained are shown in Table 1.

### Example 7

A nitrile rubber composition was prepared in the same manner as in Example 2 except that 100 parts of the carboxyl group-containing highly saturated nitrile rubber (A-5) obtained in Production Example 5 was used in place of 100 parts of the carboxyl group-containing highly saturated nitrile rubber (A-1), the amount of the FEF carbon black was altered from 40 parts to 50 parts, and the amount of hexamethylenediamine carbamate was altered from 2.4 parts to 1.9 parts, and the evaluations were performed in the same manner as in Example 1. The results thus obtained are shown in Table 1.

### Example 8

A nitrile rubber composition was prepared in the same manner as in Example 2 except that 40 part of silica (trade name "Nipsil ER", made by Tohsoh Silica Corporation) was used in place of 40 parts of the FEF carbon black, and 2 parts of a silane coupling agent (trade name "Struktol HT750", made by Struktol AG) was further added, and the evaluations were performed in the same manner as in Example 1. The results thus obtained are shown in Table 1.

### Example 9

A nitrile rubber composition was prepared in the same manner as in Example 8 except that 100 parts of the carboxyl group-containing highly saturated nitrile rubber (A-2) obtained in Production Example 2 was used in place of 100 parts of the carboxyl group-containing highly saturated nitrile rubber (A-1), and the amount of hexamethylenediamine carbamate was altered from 2.4 parts to 2 parts, and the evaluations were performed in the same manner as in Example 1. The results thus obtained are shown in Table 1.

### Example 10

A nitrile rubber composition was prepared in the same manner as in Example 8 except that 100 parts of the carboxyl group-containing highly saturated nitrile rubber (A-3) obtained in Production Example 3 was used in place of 100 parts of the carboxyl group-containing highly saturated nitrile rubber (A-1), the amount of the FEF carbon black was altered from 40 parts to 45 parts, and the amount of hexamethylenediamine carbamate was altered from 2.4 parts to 2.7 parts, and the evaluations were performed in the same manner as in Example 1. The results thus obtained are shown in Table 1.

### Example 11

A nitrile rubber composition was prepared in the same manner as in Example 8 except that 100 parts of the carboxyl group-containing highly saturated nitrile rubber (A-4) obtained in Production Example 4 was used in place of 100 parts of the carboxyl group-containing highly saturated nitrile rubber (A-1), the amount of the FEF carbon black was altered from 40 parts to 50 parts, and the amount of hexamethylenediamine carbamate was altered from 2.4 parts to 1.9 parts, and the evaluations were performed in the same manner as in Example 1. The results thus obtained are shown in Table 1.

### Example 12

A nitrile rubber composition was prepared in the same manner as in Example 8 except that 100 parts of the carboxyl group-containing highly saturated nitrile rubber (A-5) obtained in Production Example 5 was used in place of 100 parts of the carboxyl group-containing highly saturated nitrile rubber (A-1), the amount of the FEF carbon black was altered from 40 parts to 50 parts, and the amount of hexamethylenediamine carbamate was altered from 2.4 parts to 1.9 parts, and the evaluations were performed in the same manner as in Example 1. The results thus obtained are shown in Table 1.

### Example 13

A nitrile rubber composition was prepared in the same manner as in Example 2 except that 0.5 part of 4,6-bis(dodecylthiomethyl)-o-cresol (trade name "IRGANOX 1726", made by BASF Inc., antiaging agent (B); in the general formula (1), R¹=-CH₃, R²=-H, R³=-S-C₁₂H₂₅, R⁴=-H, R⁵=-S-C₁₂H₂₅) was used in place of 0.5 part of 4,6-bis(octylthiomethyl)-o-cresol, and the evaluations were performed in the same manner as in Example 1. The results thus obtained are shown in Table 1.

### Comparative Example 1

A nitrile rubber composition was prepared in the same manner as in Example 1 except that 0.5 part of 4,6-bis(octylthiomethyl)-o-cresol was not added, and the evaluations were performed in the same manner as in Example 1. The results thus obtained are shown in Table 1.

### Comparative Example 2

A nitrile rubber composition was prepared in the same manner as in Example 1 except that 0.5 part of dihydroxybutyltoluene (BHT) was used in place of 0.5 part of 4,6-bis(octylthiomethyl)-o-cresol, and the evaluations were performed in the same manner as in Example 1. The results thus obtained are shown in Table 1.

### Comparative Example 3

A nitrile rubber composition was prepared in the same manner as in Example 1 except that 100 parts of the carboxyl group-containing highly saturated nitrile rubber (A'-6) obtained in Production Example 6 was used in place of 100 parts of the carboxyl group-containing highly saturated nitrile rubber (A-1), and 1 part of polyoxyethylene alkyl ether phosphoric acid ester was not added, and the evaluations were performed in the same manner as in Example 1. The results thus obtained are shown in Table 1.

### Comparative Example 4

A nitrile rubber composition was prepared in the same manner as in Example 2 except that 100 parts of the highly saturated nitrile rubber (A'-7) obtained in Production Example 7 was used in place of 100 parts of the carboxyl group-containing highly saturated nitrile rubber (A-1), 8 parts of a 40% product of 1,3-bis(t-butylperoxyisopropyl)benzene (trade name "Vul Cup 40KE", made by GEO Specialty Chemicals Inc., organic peroxide cross-linking agent) was used in place of 2.4 parts of hexamethylenediamine carbamate and 4 parts of 1,8-diazabicyclo[5.4.0]-undecene-7(DBU), and 1 part of polyoxyethylene alkyl ether phosphoric acid ester was not added, and the evaluations were performed in the same manner as in Example 1. The results thus obtained are shown in Table 1.

### Comparative Example 5

A nitrile rubber composition was prepared in the same manner as in Comparative Example 4 except that 0.5 part of 4,6-bis(octylthiomethyl)-o-cresol was not added, and the evaluations were performed in the same manner as in Example 1. The results thus obtained are shown in Table 1.

### [Table 1]

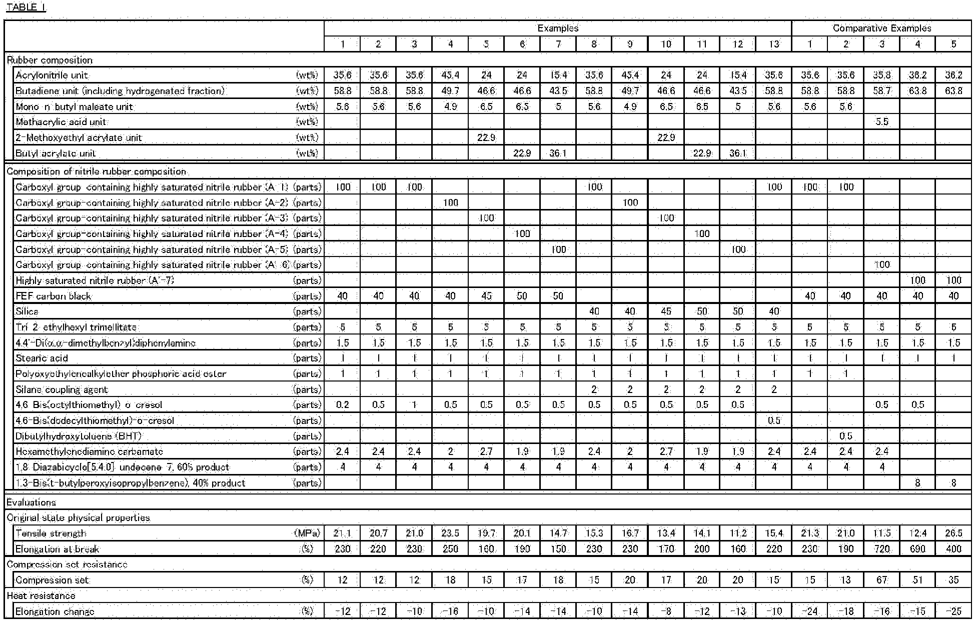

As can be seen from the results shown in Table 1, the cross-linked rubbers obtained by using the nitrile rubber compositions each comprising the carboxyl group-containing highly saturated nitrile rubber (A) containing the α,β-ethylenically unsaturated nitrile monomer unit in a content of 5 to 60 wt% and the α,β-ethylenically unsaturated dicarboxylic acid monoester monomer unit in a content of 1 to 30 wt%, and having an iodine value of 120 or less, and the phenol compound (B) represented by the general formula (1) were excellent in any of the original state physical properties, compression set resistance and heat resistance, and moreover, were highly balanced in the original state physical properties, compression set resistance and heat resistance (Examples 1 to 13).

On the other hand, both in the case where the phenol compound (B) represented by the general formula (1) was not added, and in the case where dihydroxybutyltoluene (BHT) was used in place of the phenol compound (B) represented by the general formula (1), the obtained cross-linked rubbers were poor in heat resistance (Comparative Examples 1 and 2).

The case where a carboxyl group-containing highly saturated nitrile rubber obtained by using methacrylic acid as a carboxyl group-containing monomer was used, and the case where a carboxyl group-free highly saturated nitrile rubber was used each resulted in an obtained cross-linked rubber having a too large elongation at break, and moreover, having a poor compression set resistance (Comparative Examples 3 and 4).

Moreover, the case where a carboxyl group-free highly saturated nitrile rubber was used, and the phenol compound (B) represented by the general formula (1) was not added resulted in an obtained cross-linked rubber having a poor compression set resistance and a poor heat resistance (Comparative Example 5).

## Claims

1. A nitrile rubber composition comprising
a carboxyl group-containing highly saturated nitrile rubber (A) containing an α,β-ethylenically unsaturated nitrile monomer unit in a content of 5 to 60 wt% and an α,β-ethylenically unsaturated dicarboxylic acid monoester monomer unit in a content of 1 to 30 wt%, and having an iodine value of 120 or less, and a phenol compound (B) represented by the following general formula (1): 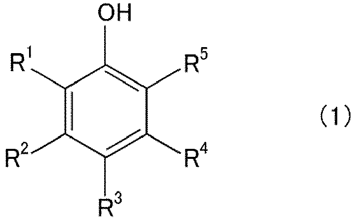 (In the general formula (1), R¹ to R⁵ are each independently a hydrogen atom, a heteroatom-free alkyl group having 1 to 8 carbon atoms, or a heteroatom-containing alkyl group having 1 to 15 carbon atoms, and at least one of R¹ to R⁵ is a heteroatom-containing alkyl group having 1 to 15 carbon atoms.)

2. The nitrile rubber composition according to claim 1, wherein the heteroatom-containing alkyl group having 1 to 15 carbon atoms is a group represented by the following general formula (2).
-A¹-R⁶ (2)
(In the general formula (2), A¹ is at least one heteroatom selected from O, S, P, N, F, Cl, and Br, and R⁶ is an alkyl group having 1 to 15 carbon atoms.)

3. The nitrile rubber composition according to claim 1 or 2, wherein the phenol compound (B) is a compound represented by the following general formula (3): 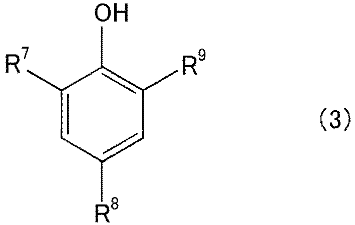 (In the general formula (3), R⁷ to R⁹ are each independently a heteroatom-free alkyl group having 1 to 8 carbon atoms or a heteroatom-containing alkyl group having 1 to 15 carbon atoms, and one of R⁷ to R⁹ is a heteroatom-free alkyl group having 1 to 8 carbon atoms, and two of R⁷ to R⁹ are each a heteroatom-containing alkyl group having 1 to 15 carbon atoms.)

4. The nitrile rubber composition according to any one of claims 1 to 3, wherein the content of the phenol compound (B) is 0.1 to 1 part by weight with respect to 100 parts by weight of the carboxyl group-containing highly saturated nitrile rubber (A).

5. A cross-linkable nitrile rubber composition prepared by mixing a cross-linking agent in the nitrile rubber composition according to any one of claims 1 to 4.

6. The cross-linkable nitrile rubber composition according to claim 5, wherein the cross-linking agent is a polyamine-based cross-linking agent.

7. A cross-linked rubber prepared by cross-linking the cross-linkable nitrile rubber composition according to claim 5 or 6.
